# EUROPÄISCHE PATENTANMELDUNG

(11) **EP 0 579 007 A2**
(43) Veröffentlichungstag der Anmeldung: **19.01.1994**
(21) Anmeldenummer: 93110059.8
(22) Anmeldetag: 24.06.1993
(51) Int. Cl.: E04F 13/04

(54) **Bewehrungsmatte für Verputzschichten von Gebäuden**

(30) Priorität: 17.07.1992 DE 4223508
(71) Anmelder: Maier, Paul, D-72827 Wannweil (DE)
(72) Erfinder: Maier, Paul, D-72827 Wannweil (DE)
(74) Vertreter: Möbus, Rudolf, Dipl.-Ing.

(57) **Zusammenfassung**

Die Bewehrungsmatte (10) für Verputzschichten von Gebäuden ist mit Abstandshaltern (14) versehen, die aus dem gleichen Material wie die Bewehrungsmatte bestehen und durch bleibende Verformungen von Gitterstreifen (13) gebildet sind, die an der Bewehrungsmatte (10) befestigt sind.

## Beschreibung

Die Erfindung betrifft eine Bewehrungsmatte für Verputzschichten von Gebäuden, bestehend aus gitterartig miteinander verbundenen, mit einer Kunststoffbeschichtung versehenen Glasfasersträngen.

Gitterartige Bewehrungsmatten, sogenannte Glasfasergewebe, bei welchen die Glasfaserstränge durch eine Kunststoffbeschichtung gegen den Einfluß alkalischer Bestandteile des Verputzes geschützt sind, sind bekannt und in großem Umfange im Einsatz. Um die Bewehrungsmatte vor Aufbringen der Verputzschicht in einem gewünschten Abstand von der zu verputzenden Wandungsfläche zu halten, werden Abstandshalter verschiedener Art verwendet, die auf die Wandung oder auf die Bewehrungsmatte aufgesetzt werden, beispielsweise runde Scheiben aus Styropor oder dergleichen. Diese Abstandshalter haben den Nachteil, daß sie an ihrer Ansatzstelle zwischen der Bewehrungsmatte und der zu verputzenden Wandung verputzfreie Stellen schaffen. Außerdem unterscheidet sich ihr Wärmeleitvermögen von demjenigen der Bewehrungsmatte. Die Folge davon ist, daß bei Außenverputzschichten, die dem Regen ausgesetzt sind, die Abstandshaltestellen als dunklere Flecken in der Verputzschicht, insbesondere einer Wärmedämmverputzschicht, erscheinen können.

Der Erfindung liegt die Aufgabe zugrunde, eine Bewehrungsmatte mit Abstandshalterung zu schaffen, bei welcher sich keine Brücken mit abweichender Wärmeleitfähigkeit in der Verputzschicht bilden können.

Die gestellte Aufgabe wird mit einer Bewehrungsmatte der eingangs genannten Art erfindungsgemäß dadurch gelöst, daß die Bewehrungsmatte einseitig mit Abstandshaltern aus einem Material versehen ist, das die gleichen Wärmeleiteigenschaften wie das Material der Bewehrungsmatte aufweist. Dies läßt sich mit Sicherheit dann erreichen, wenn die Abstandshalter aus dem gleichen Gittermaterial wie die Bewehrungsmatte gefertigt werden. Bei einer bevorzugten Ausführungsform bestehen daher die Abstandshalter aus fixierten Auswölbungen oder Ausbiegungen von Glasfaser-Gitterstreifen, die einseitig auf der Bewehrungsmatte befestigt sind. Dabei wird ein weiterer wichtiger Vorteil erzielt, daß auch an den Stellen der Abstandshalter Verputzmasse in den Raum zwischen Bewehrungsmatte und Wandung eindringen kann, also keine verputzfreien Bereiche zwischen Bewehrungsmatte und Gebäudewandung vorhanden sind.

Eine bleibende Verformung der kunststoffbeschichteten Glasfaser-Gitterstreifen, die aus Abschnitten einer handelsüblichen Bewehrungsmatte bestehen können, läßt sich erfindungsgemäß durch ein Herstellverfahren mit folgenden Verfahrensschritten erreichen:
a) Einbringen von ursprünglich ebenen, kunststoffbeschichteten Glasfaser-Gitterstreifen oder -Gitterstreifenabschnitten in erwärmtem Zustand in eine den Querschnitt der Auswölbungen bestimmende Preßform;
b) Abkühlen des Gitterstreifens in der Preßform zur erneuten Fixierung der Kunststoffbeschichtung;
c) Befestigen von bleibend verformten Gitterstreifen mit Abstand auf einer Seite eines ebenen Stützstreifens oder einer ebenen Bewehrungsmatte.

Bei diesem Verfahren werden Zusatzstoffe, etwa Kunststoffmasse zum Fixieren der als Abstandshalter dienenden Auswölbungen oder Ausbiegungen vermieden. Die Gitteröffnungen der Gitterstreifen und auch der Bewehrungsmatte bleiben an den Stellen der Abstandshalter offen. Das Befestigen der bleibend verformten Gitterstreifen auf der Bewehrungsmatte kann je nach Ausführungsform des Gitterstreifens gleichzeitig mit der Ausbildung der Auswölbungen im Gitterstreifen oder unmittelbar danach in einem zusätzlichen Verfahrensschritt mittels einer gesonderten Preßvorrichtung erfolgen. Dabei kann ein Ansiegeln des verformten Gitterstreifens allein durch Erwärmen der Bewehrungsmatte im Befestigungsbereich erreicht werden.

Die bleibende Verformung der zur Abstandshalterung eingesetzten Gitterstreifen läßt sich beispielsweise mittels einer Vorrichtung durchführen, die erfindungsgemäß eine taktweise betätigbare, zweiteilige Preßform aufweist, in deren einer Hälfte mindestens eine dem Querschnitt einer Abstandshalter-Auswölbung entsprechende Ausnehmung ausgebildet ist, in welche ein kühlbares Rohr als Gegenformstück eintauchbar ist. Dabei kann der Gitterstreifen taktweise durch die Preßform hindurchbewegt werden. Zur Bildung von Gitterstreifen mit einer sickenartig über ihre Länge durchlaufenden Auswölbung kann eine Vorrichtung verwendet werden, welche eine Formvorrichtung mit einem Ziehkeil zur Bildung der sickenartig in Längsrichtung eines Gitterstreifens verlaufenden Abstandshalter-Auswölbung aufweist.

Nachfolgend wird ein Ausführungsbeispiel einer erfindungsgemäß ausgebildeten Bewehrungsmatte sowie eine Vorrichtung zu ihrer Herstellung anhand der beiliegenden schematischen Zeichnung näher erläutert.

Im einzelnen zeigen:
- Fig. 1: eine perspektivische Teilbereichsdarstellung einer mit Abstandhaltern versehenen Bewehrungsmatte;
- Fig. 2: eine Seitenansicht eines für die Abstandhalterung verformten, wickelbaren Gitterstreifens vor seiner Befestigung auf einer Bewehrungsmatte;
- Fig. 3: einen Abschnitt eines breiten Gitterstreifens mit einer Längssicke als Abstandshalter;
- Fig. 4: eine schematische Seitenansicht einer Vorrichtung zur Herstellung eines Gitterstreifens nach Fig. 2;
- Fig. 4a: ein Detail der Vorrichtung nach Fig. 4;
- Fig. 5: eine schematische Teilseitenansicht einer Vorrichtung zur Herstellung eines Gitterstreifens nach Fig. 3;
- Fig. 6: einen Querschnitt durch den gebildeten Gitterstreifen entlang der Linie VI-VI in Fig. 5.

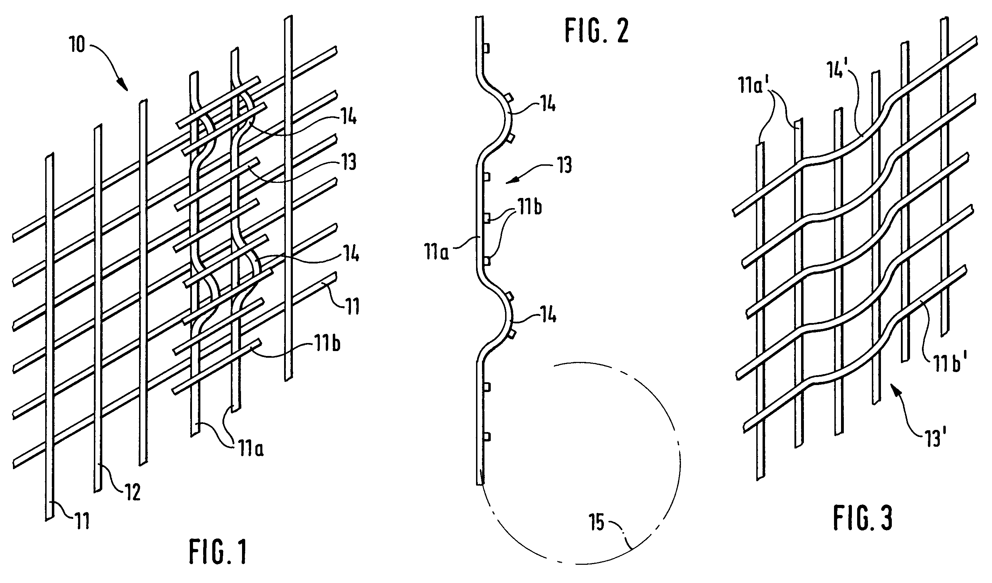

Fig. 1 zeigt einen Ausschnitt aus einer handelsüblichen Bewehrungsmatte 10, die aus mit Abstand zueinander verlaufenden, sich kreuzenden Glasfasersträngen 11 als Gittergebilde hergestellt ist. Die Glasfaserstränge 11 sind mit einer Kunststoffschicht ummantelt, mit deren Hilfe die sich kreuzenden Stränge 11 an den Kreuzungsstellen 12 ach miteinander verbunden sind. Auf diese Bewehrungsmatte 10 ist auf einer Seite ein Gitterstreifen 13 befestigt, der den gleichen Aufbau wie die Bewehrungsmatte 10 hat und in Abständen quer zu seiner Längsrichtung verlaufende Auswölbungen 14 aufweist, die am besten aus der Seitenansicht des Gitterstreifens 13 nach Fig. 2 ersichtlich sind. Der Gitterstreifen 13 kann aus einer Bewehrungsmatte 10 geschnitten sein, bevor er mit den bleibenden Auswölbungen 14 versehen wird, also aus in seiner Längsrichtung verlaufenden, mit Kunststoff beschichteten Glasfasersträngen 11a und dazu querverlaufenden kurzen Glasfasersträngen 11b bestehen. Dieser Gitterstreifen 13 läßt sich nach der Ausbildung der Abstands-Auswölbungen 14 zu einer in Fig. 2 schematisch angedeuteten Rolle 15 wickeln und in diesen Zustand speichern, bevor er auf eine Bewehrungsmatte 10 aufgebracht und auf ihr befestigt wird.

Fig. 3 zeigt eine andere Ausführungsform für die Abstandshalterung einer Bewehrungsmatte, nämlich einen breiten Gitterstreifen 13' mit mehreren in seiner Längsrichtung verlaufenden Glasfasersträngen 11a' und quer dazu verlaufenden Glasfasersträngen 11b'. In der Mitte dieses breiten Gitterstreifens 13' ist eine Auswölbung 14' als sich über die ganze Länge des Gitterstreifens 13' erstreckende Sicke ausgebildet. Diese nicht rollbaren aber stapelbaren Gitterstreifen 13' werden auf die gleiche Weise wie die schmalen Gitterstreifen 13 auf einer Bewehrungsmatte befestigt, insbesondere durch Ansiegeln, indem im Befestigungsbereich die Kunststoffbeschichtung des Gitterstreifens und/oder der Bewehrungsmatte angelöst und der Gitterstreifen aufgepreßt wird, bevor sich das chemische Lösungsmittel wieder verflüchtigt und eine Wiederverfestigung der Kunststoffbeschichtung eintritt.

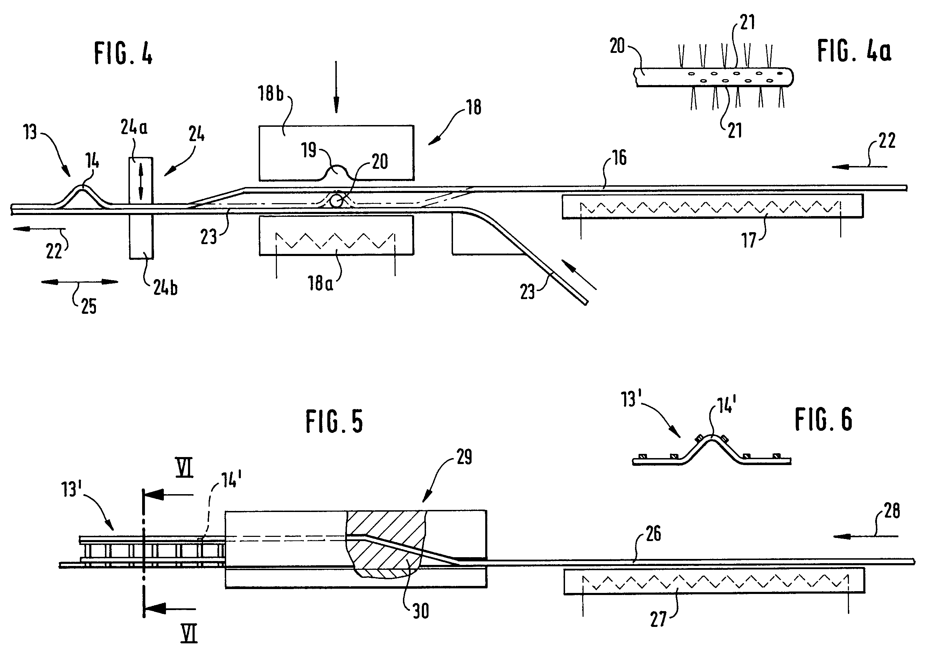

Fig. 4 zeigt schematisch eine Vorrichtung, mit welcher sich Gitterbänder 13 gemäß Fig. 2 herstellen lassen. Ein ebener Gitterstreifen 16, aus einer Bewehrungsmatte gefertigt, wird über eine Heizplatte 17 bewegt und dabei seine Kunststoffbeschichtung erweicht. Von der Heizplatte 17 gelangt der Gitterstreifen 16 in eine Formpresse 18, bestehend aus einer beheizbaren Unterform 18a und einer kalten Oberform 18b. Die kalte Oberform 18b weist eine durchgehende Ausbuchtung 19 auf, deren Querschnitt den Querschnitt der gewünschten Auswölbungen des Gitterbandes 13 entspricht. Zwischen der Unterform 18a und der Oberform 18b ist ein in die Ausbuchtung 19 der Oberform passendes, beim Zusammenbringen von Unterform und Oberform als Patrize wirkendes Rohr 20 angeordnet. Gemäß Fig. 4a ist dieses Rohr 20 als Kühlrohr ausgebildet, das mit Düsenöffnungen 21 versehen und an eine nicht dargestellte Druckluftquelle anschließbar ist. Das Rohr 20 läßt sich quer zur Vorschubrichtung 22 des Gitterstreifens 16 und des Gitterbandes 13, also senkrecht zur Zeichnungsebene, aus der Preßform 18 entfernen.

Mittels der Preßform 18 lassen sich also die Auswölbungen 14 in den Gitterstreifen 16 einformen, die durch das Abkühlen und dadurch Wiederverfestigung der vorher erweichten Kunststoffbeschichtung des Gitterstreifens in ihrer Lage fixieren lassen. Das Gitterband 13 kann aber auch durch einen zweiten ebenen Gitterstreifen, auf welche der erste und mit den Auswölbungen 14 versehene Gitterstreifen 16 aufgesiegelt wird, sichern und verstärken. Dies kann ebenfalls in der Preßform 18 erfolgen. In Fig. 4 ist dieser zweite und unverformt bleibende ebene Gitterstreifen 23 eingezeichnet. Er kommt zur Auflage auf die Unterform 18a der Preßvorrichtung 18. Diese Unterform 18a wird in diesem Falle beheizt und damit die Kunststoffbeschichtung dieses zweiten Gitterstreifens 23 bis zur Siegelfähigkeit erweicht. Beim Schließen der Preßteile wird somit während der Bildung und anschließenden Fixierung einer Ausbuchtung 14 im ersten Gitterstreifen 16 diese Gitterstreifen 16 mit seinem unverformten Bereich mit dem Zweiten ebenen Gitterstreifen 23 fest verbunden. Der Vorschub der beiden Gitterstreifen 16 und 23 erfolgt gleichzeitig und taktweise mittels einer schematisch angedeuteten Greifvorrichtung 24, die aus zwei an dem fertiggestellten Gitterband 13 angreifenden Klemmbacken 24a, 24b besteht und in Richtung des Doppelpfeiles 25 bewegbar ist.

Fig. 5 zeigt einen wesentlichen Teil einer Vorrichtung zur Herstellung des breiten Gitterstreifens 13' nach Fig. 3, bei welchem sich die Auswölbung 14' über seine ganze Länge in Form einer Sicke erstreckt. Ein ebener Gitterstreifen 26 wird zunächst zur Erweichung seiner Kunststoffbeschichtung über eine Heizplatte 27 in Richtung des Pfeiles 28 bewegt. Der Gitterstreifen 26 wird anschließend durch eine unbeheizte Formvorrichtung 29 hindurchgezogen, innerhalb welcher zur Bildung der Sicke 14' ein Formkeil 30 ausgebildet ist. Sofort nach erfolgter Sickenbildung wird der Gitterstreifen noch in der Formvorrichtung 29 abgekühlt und dadurch in seiner aus Fig. 3 und dem Schnittbild der Fig. 6 ersichtlichen Form stabilisiert.

Auch der Gitterstreifen 13' kann wie der Gitterstreifen 13 auf einen ebenen zweiten Gitterstreifen aufgebracht und mit ihm verbunden werden. Dies kann beispielsweise durch Aufwalzen des fertiggestellten verformten Gitterstreifens 13' auf den zweiten Gitterstreifen oder direkt auf eine Bewehrungsmatte mittels nicht dargestellter Preßwalzen erfolgen, deren eine eine Ausnehmung für die Aufnahme der sickenartigen Auswölbung 14' aufweist.

Anstelle von Auswölbungen 14 oder 14' können in den Gitterstreifen 13 oder 13' auch Ausknickungen vorgesehen werden, die sich ebenfalls durch Erhitzen und anschließendes Abkühlen der Kunststoffbeschichtung der Glasfaserstränge fixieren lassen.

## Patentansprüche

1. Bewehrungsmatte für Verputzschichten von Gebäuden, bestehend aus gitterartig miteinander verbundenen, mit einer Kunststoffbeschichtung versehenen Glasfasersträngen, dadurch gekennzeichnet, daß sie einseitig mit Abstandshaltern aus einem Material versehen ist, das die gleichen Wärmeleiteigenschaften Wie das Material der Bewehrungsmatte (10) aufweist.

2. Bewehrungsmatte nach Anspruch 1, dadurch gekennzeichnet, daß die Abstandshalter aus dem gleichen Gittermaterial wie die Bewehrungsmatte (10) gefertigt sind.

3. Bewehrungsmatte nach Anspruch 1 und 2, dadurch gekennzeichnet, daß die Abstandshalter aus fixierten Auswölbungen (14) oder Ausbiegungen von Glasfaser-Gitterstreifen (13, 13') bestehen, die einseitig auf der Bewehrungsmatte (10) befestigt sind.

4. Bewehrungsmatte nach Anspruch 3, dadurch gekennzeichnet, daß die Glasfaser-Gitterstreifen (13, 13') auf die gitterförmige Bewehrungsmatte (10) aufgesiegelt sind.

5. Verfahren zum Herstellen einer Bewehrungsmatte nach einem der Ansprüche 1 bis 4, gekennzeichnet durch die aufeinanderfolgenden Verfahrensschritte:
a) Einbringen von ursprünglich ebenen, kunststoffbeschichteten Glasfaser-Gitterstreifen (16) oder -Gitterstreifenabschnitten in erwärmtem Zustand in eine den Querschnitt der Auswölbungen bestimmende Preßform (18);
b) Abkühlen des Gitterstreifens (16) in der Preßform (18) zur erneuten Fixierung der Kunststoffbeschichtung;
c) Befestigen von bleibend verformten Gitterstreifen mit Abstand auf einer Seite eines ebenen Stützstreifens (23) oder einer ebenen Bewehrungsmatte (10).

6. Verfahren nach Anspruch 5, dadurch gekennzeichnet, daß das Befestigen des verformten Gitterstreifens (13) auf einem Stützstreifen (23) oder einer Bewehrungsmatte (10) gleichzeitig mit der Bildung der Auswölbungen (14) in der Preßform (18) erfolgt, wobei eine Erwärmung des Stützstreifens (23) oder der Bewehrungsmatte (10) für ein Ansiegeln des Gitterstreifens (13) erfolgt.

7. Verfahren zum Herstellen einer Bewehrungsmatte nach einem der Ansprüche 1 bis 4, gekennzeichnet durch die aufeinanderfolgenden Verfahrensschritte:
a) Erwärmen eines ebenen Gitterstreifens zur Plastifizierung seiner Kunststoffbeschichtung;
b) Durchziehen des erwärmten Gitterstreifens (26) durch eine Formvorrichtung unter Bildung einer über die Länge des Gitterstreifens (26) durchlaufenden Sicke (14');
c) Abkühlen des verformten Gitterstreifens (13') und dabei Fixierung der durchgehenden Auswölbung (14');
d) Befestigen des bleibend verformten Gitterstreifens auf einem Stützstreifen oder einer ebenen Bewehrungsmatte (10) durch Aufpressen des Gitterstreifens (13') auf die im Befestigungsbereich erwärmte Bewehrungsmatte (10).

8. Vorrichtung zur Herstellung von Abstandshaltern nach einem der Ansprüche 1 bis 4 und zur Durchführung des Verfahrens nach Anspruch 5 oder 6, dadurch gekennzeichnet, daß sie eine taktweise betätigbare, zweiteilige Preßform (18) aufweist, in deren einer Hälfte mindestens eine dem Querschnitt einer Abstandshalter-Auswölbung (14) entsprechende Ausnehmung (19) ausgebildet ist, in welche ein kühlbares Rohr (20) als Gegenformstück eintauchbar ist.

9. Vorrichtung zur Durchführung des Verfahrens nach Anspruch 7, dadurch gekennzeichnet, daß sie eine Formvorrichtung (29) mit einem Ziehkeil (30) zur Bildung der sickenartig in Längsrichtung eines Gitterstreifens (13') verlaufenden Abstandshalter-Auswölbung (14') aufweist.
